(19) Europäisches Patentamt
European Patent Office
Office européen des brevets

(11) EP 3 250 620 B1

(12) # EUROPÄISCHE PATENTSCHRIFT

(45) Veröffentlichungstag und Bekanntmachung des Hinweises auf die Patenterteilung:
**14.11.2018 Patentblatt 2018/46**

(21) Anmeldenummer: **16701955.3**

(22) Anmeldetag: **29.01.2016**

(51) Int Cl.:
***C08G 18/44*** (2006.01) ***C08G 18/76*** (2006.01)
***C08J 9/12*** (2006.01) ***C08K 5/18*** (2006.01)
***C08L 75/04*** (2006.01)

(86) Internationale Anmeldenummer:
**PCT/EP2016/051898**

(87) Internationale Veröffentlichungsnummer:
**WO 2016/120437 (04.08.2016 Gazette 2016/31)**

(54) **POLYURETHANSCHAUMSTOFFE BASIEREND AUF POLYETHERCARBONATPOLYOLEN**
POLYURETHANE FOAMS BASED ON POLYETHER CARBONATE POLYOLS
MOUSSES DE POLYURÉTHANE À BASE DE POLYÉTHERCARBONATPOLYOLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.01.2015 EP 15153242**

(43) Veröffentlichungstag der Anmeldung:
**06.12.2017 Patentblatt 2017/49**

(73) Patentinhaber: **Covestro Deutschland AG**
**51373 Leverkusen (DE)**

(72) Erfinder:
- **KLESCZEWSKI, Bert**
**51069 Köln (DE)**
- **RAUWALD, Urs**
**40597 Düsseldorf (DE)**
- **HOFMANN, Jörg**
**47800 Krefeld (DE)**

(74) Vertreter: **Levpat**
**c/o Covestro AG**
**Gebäude 4825**
**51365 Leverkusen (DE)**

(56) Entgegenhaltungen:
**WO-A1-2008/058913** **WO-A2-96/12760**
**US-A- 4 146 687** **US-A- 5 219 892**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 250 620 B1

## Beschreibung

Die vorliegende Erfindung betrifft ein Verfahren zur Herstellung von Polyurethanschaumstoffen, vorzugsweise Polyurethanweichschaumstoffe, durch Reaktion einer Isocyanat-Komponente mit einer gegenüber Isocyanaten reaktiven Komponente, die mindestens ein Polyethercarbonatpolyol umfasst, und wobei die Umsetzung in Gegenwart eines aminischen Antioxidans erfolgt. Die Erfindung betrifft weiterhin durch das erfindungsgemäße Verfahren hergestellte Polyurethanschaumstoffe und deren Verwendung.

WO-A 2008/058913 beschreibt die Herstellung von Polyurethanweichschaumstoffen aus Polyethercarbonatpolyolen unter Verwendung von aminfreien Stabilisatoren gegen thermooxidativen Abbau, also aminfreie Antioxidantien wie sterisch gehinderte Phenole, Lactone und aminfreie Antioxidantien, die kein Phenol abspalten, sowie beliebige Mischungen dieser Verbindungen. Die Verwendung von aminischen Antioxidantien wird nicht offenbart.

Im Rahmen einer umweltfreundlichen Ausrichtung von Produktionsprozessen ist es generell wünschenswert, $CO_2$-basierte Ausgangsstoffe in relativ großen Mengen einzusetzen. Bei der Herstellung der Polyurethanschaumstoffe neigen diese zu thermooxidativen Abbau. Daher bestand die Aufgabe der vorliegenden Erfindung darin, ein Verfahren zur Herstellung von Polyurethanschaumstoffen bereitzustellen, die einen hohen Anteil an Polyethercarbonatpolyolen aufweisen, wobei die resultierenden Polyurethanschaumstoffe gegen thermooxidativen Abbau geschützt sind.

Überraschenderweise wurde diese Aufgabe gelöst durch ein Verfahren zur Herstellung von Polyurethanschaumstoffen, in dem die Umsetzung einer Isocyanat-Komponente B mit einer gegenüber Isocyanaten reaktiven Komponente A, die mindestens ein Polyethercarbonatpolyol umfasst, in Gegenwart eines aminischen Antioxidans erfolgt.

Gegenstand der Erfindung ist daher ein Verfahren zur Herstellung von Polyurethanschaumstoffen, vorzugsweise Polyurethanweichschaumstoffen, durch Umsetzung von Komponente A enthaltend

A1 $\geq$ 50 bis $\leq$ 100 Gew.-Teile, vorzugsweise $\geq$ 70 bis $\leq$ 100 Gew.-Teile, besonders bevorzugt $\geq$ 80 bis $\leq$ 100 Gew.-Teile eines Polyethercarbonatpolyols mit einer Hydroxylzahl gemäß DIN 53240 von $\geq$ 20 mg KOH/g bis $\leq$ 250 mg KOH/g, vorzugsweise von $\geq$ 20 mg KOH/g bis $\leq$ 150 mg KOH/g, besonders bevorzugt von $\geq$ 25 mg KOH/g bis $\leq$ 90 mg KOH/g,

A2 $\leq$ 50 bis $\geq$ 0 Gew.-Teile, bevorzugt von $\leq$ 30 bis $\geq$ 0 Gew.-Teile, besonders bevorzugt von $\leq$ 20 bis $\geq$ 0 Gew.-Teile, eines Polyetherpolyols mit einer Hydroxylzahl gemäß DIN 53240 von $\geq$ 20 mg KOH/g bis $\leq$ 250 mg KOH/g, vorzugsweise von $\geq$ 20 bis $\leq$ 112 mg KOH/g und besonders bevorzugt $\geq$ 20 mg KOH/g bis $\leq$ 80 mg KOH/g, wobei das Polyetherpolyol A2 frei von Carbonateinheiten ist,

A3 0,5 bis 25 Gew.-Teile, bevorzugt 1,0 bis 15 Gew.-Teile, besonders bevorzugt 1,5 bis 10 Gew.-Teile bezogen auf die Summe der Gew.-Teile der Komponenten A1 und A2, Wasser und/oder physikalische Treibmittel,

A4 0,02 - 3,0 Gew.-Teile, bevorzugt 0,04 - 2,0 Gew.-Teile, besonders bevorzugt 0,05 - 1,5 Gew.-Teile, bezogen auf die Summe der Gew.-Teile der Komponenten A1 und A2, eines Antioxidans, welches mindestens eine Verbindung der Formel

HNR1R2 (V1)

worin R1 C1-C18 Alkyl, Phenyl-C1-C4-alkyl, C5-C12-Cycloalkyl, Phenyl, Naphthyl, Phenyl oder Naphthyl von denen jedes substituiert ist durch C1-C12 Alkyl oder C1-C12 Alkoxy oder Benzyl oder $\alpha,\alpha$-Dimethylbenzyl entspricht, und R2 Phenyl, Naphthyl, Phenyl oder Naphthyl, von denen jedes substituiert ist durch C1-C12 Alkyl oder C1-C12 Alkoxy oder Benzyl oder $\alpha,\alpha$-Dimethylbenzyl, entspricht, umfasst,

A5 0,1 bis 8,1 Gew.-Teile, bevorzugt 0,1 bis 7,5 Gew,-Teile, besonders bevorzugt 0,15-7,0 Gew.-Teile bezogen auf die Summe der Gew.-Teile der Komponenten A1 und A2, Hilfs- und Zusatzstoffe

mit Komponente B enthaltend Di- und/oder Polyisocyanate,
wobei die Herstellung bei einer Kennzahl von 70 bis 130, bevorzugt von 85 bis 125, besonders bevorzugt von 90 bis 120 erfolgt,
wobei alle Gewichtsteilangaben der Komponenten A1 bis A5 so normiert sind, dass die Summe der Gewichtsteile A1 + A2 in der Zusammensetzung 100 ergibt, und wobei

a) Komponente A neben dem Antioxidans A4 keine anderen Antioxidantien enthält, oder
b) Komponente A neben dem Antioxidans A4 keine Antioxidantien enthält, die eine Verbindung oder mehrere Verbindungen umfassen ausgewählt aus der Gruppe

i) Phenol-Derivate
ii) Lactone
iii) Phosphor-Derivate.

Es wurde nun gefunden, dass die gemäß erfindungsgemäßen Verfahren hergestellten Polyurethanschaumstoffe gegen den thermooxidativen Abbau geschützt sind. Dieser thermooxidativen Abbau kann beispielsweise bestimmt werden, indem die Polyurethanschaumrezeptur nach dem Verschäumen einer Mikrowellenbehandlung unterzogen wird und anschließend die Kernverfärbung bestimmt wird. An Hand der Kernverfärbung (Yellowness Index) nach dieser Mikrowellenbehandlung lassen sich Rückschlüsse auf den thermooxidativen Abbau ziehen und damit über die Stabilisierung der Polyurethanschaumrezeptur. Eine schwache Kemverfärbung zeigt, dass die Polyurethanrezeptur gegen den thermooxidativen Abbau stabilisiert ist.

Zur Herstellung der Polyurethanschaumstoffe werden die Reaktionskomponenten nach dem an sich bekannten Einstufenverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.

Die Polyurethanschaumstoffe liegen vorzugsweise als Polyurethanweichschaumstoffe vor und können als Form- oder auch als Blockschaumstoffe, vorzugsweise als Blockschaumstoffe hergestellt werden. Gegenstand der Erfindung sind daher ein Verfahren zur Herstellung der Polyurethanschaumstoffe, die nach diesen Verfahren hergestellten Polyurethanschaumstoffe, die nach diesen Verfahren hergestellten Polyurethanweichblockschaumstoffe bzw. Polyurethanweichformschaumstoffe, die Verwendung der Polyurethanweichschaumstoffe zur Herstellung von Formteilen sowie die Formteile selbst.

Im Folgenden sind die im erfindungsgemäßen Verfahren eingesetzten Komponenten näher beschrieben.

Komponente A1

Die Komponente A1 umfasst ein Polyethercarbonatpolyol mit einer Hydroxylzahl (OH-Zahl) gemäß DIN 53240 von ≥ 20 mg KOH/g bis ≤ 250 mg KOH/g, vorzugsweise von ≥ 20 mg KOH/g bis ≤ 150 mg KOH/g, besonders bevorzugt von ≥ 25 mg KOH/g bis ≤ 90 mg KOH/g, welches erhältlich ist durch Copolymerisation von ≥ 2 Gew.-% bis ≤ 30 Gew.-% Kohlendioxid und ≥ 70 Gew.-% bis ≤ 98 Gew.-% einem oder mehreren Alkylenoxiden, in Gegenwart eines oder mehrerer H-funktioneller Startermoleküle mit einer durchschnittlichen Funktionalität von ≥ 1 bis ≤ 6, bevorzugt von ≥ 1 und ≤ 4, besonders bevorzugt ≥ 2 und ≤ 3. Unter "H-funktionell" wird im Sinne der Erfindung eine Starterverbindung verstanden, die gegenüber Alkoxylierung aktive H-Atome aufweist.

Vorzugsweise erfolgt die Copolymerisation von Kohlendioxid und einem oder mehreren Alkylenoxiden in Gegenwart mindestens eines DMC-Katalysators (Doppelmetallcyanid-Katalysators).

Vorzugsweise weisen die erfindungsgemäß eingesetzten Polyethercarbonatpolyole zwischen den Carbonatgruppen auch Ethergruppen auf, was in Formel (IX) schematisch dargestellt wird. In dem Schema gemäß Formel (IX) steht R für einen organischen Rest wie Alkyl, Alkylaryl oder Aryl, der jeweils auch Heteroatome wie beispielsweise O, S, Si usw. enthalten kann, e und f stehen für eine ganzzahlige Zahl. Das im Schema gemäß Formel (IX) gezeigte Polyethercarbonatpolyol soll lediglich so verstanden werden, dass sich Blöcke mit der gezeigten Struktur im Polyethercarbonatpolyol prinzipiell wiederfinden können, die Reihenfolge, Anzahl und Länge der Blöcke aber variieren kann und nicht auf das in Formel (IX) gezeigte Polyethercarbonatpolyol beschränkt ist. In Bezug auf Formel (IX) bedeutet dies, dass das Verhältnis von e/f bevorzugt von 2 : 1 bis 1 : 20, besonders bevorzugt von 1,5 : 1 bis 1 : 10 beträgt.

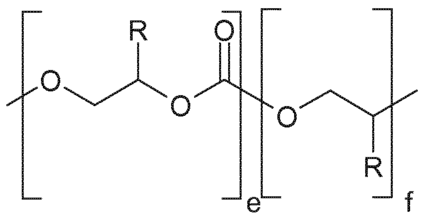

(IX)

Der Anteil an eingebautem $CO_2$ ("aus Kohlendioxid stammende Einheiten") in einem Polyethercarbonatpolyol lässt sich aus der Auswertung charakteristischer Signale im $^1H$-NMR-Spektrum bestimmen. Das nachfolgende Beispiel illustriert die Bestimmung des Anteils an aus Kohlendioxid stammenden Einheiten in einem auf 1,8-Octandiol gestarteten $CO_2$/Propylenoxid-Polyethercarbonatpolyol.

Der Anteil an eingebautem $CO_2$ in einem Polyethercarbonatpolyol sowie das Verhältnis von Propylencarbonat zu Polyethercarbonatpolyol kann mittels $^1H$-NMR (ein geeignetes Gerät ist von der Firma Bruker, DPX 400, 400 MHz; Pulsprogramm zg30, Wartezeit d1: 10s, 64 Scans) bestimmt werden. Die Probe wird jeweils in deuteriertem Chloroform gelöst. Die relevanten Resonanzen im $^1H$-NMR (bezogen auf TMS = 0 ppm) sind wie folgt:
Cyclisches Carbonat (welches als Nebenprodukt gebildet wurde) mit Resonanz bei 4,5 ppm; Carbonat, resultierend aus im Polyethercarbonatpolyol eingebautem Kohlendioxid mit Resonanzen bei 5,1 bis 4,8 ppm; nicht abreagiertes Propylenoxid (PO) mit Resonanz bei 2,4 ppm; Polyetherpolyol (d.h. ohne eingebautes Kohlendioxid) mit Resonanzen bei 1,2 bis 1,0 ppm; das als Startermolekül (soweit vorhanden) eingebaute 1,8 Octandiol mit einer Resonanz bei 1,6 bis 1,52 ppm.

Der Molenanteil des im Polymer eingebauten Carbonats in der Reaktionsmischung wird nach Formel (I) wie folgt berechnet, wobei folgende Abkürzungen verwendet werden:

F(4,5) = Fläche der Resonanz bei 4,5 ppm für cyclisches Carbonat (entspricht einem H Atom) F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2-1,0 ppm für Polyetherpolyol
F(1,6-1,52) = Fläche der Resonanz bei 1,6 bis 1,52 ppm für 1,8 Octandiol (Starter), soweit vorhanden.

Unter Berücksichtigung der relativen Intensitäten wurde gemäß der folgenden Formel (I) für das polymer gebundene Carbonat ("lineares Carbonat" LC) in der Reaktionsmischung in mol% umgerechnet:

$$LC = \frac{F(5{,}1-4{,}8) - F(4{,}5)}{F(5{,}1\text{-}4{,}8) + F(2{,}4) + 0{,}33 * F(1{,}2\text{-}1{,}0) + 0{,}25 * F(1{,}6\text{-}1{,}52)} * 100 \qquad (I)$$

Der Gewichtsanteil (in Gew.-%) polymer-gebundenen Carbonats (LC') in der Reaktionsmischung wurde nach Formel (II) berechnet,

$$LC' = \frac{[F(5{,}1-4{,}8) - F(4{,}5)] * 102}{N} * 100\% \qquad (II)$$

wobei sich der Wert für N ("Nenner" N) nach Formel (III) berechnet:

$$N = [F(5{,}1-4{,}8) - F(4{,}5)] * 102 + F(4{,}5) * 102 + F(2{,}4) * 58 + 0{,}33 * F(1{,}2-1{,}0) * 58 + 0{,}25 * F(1{,}6-1{,}52) * 146 \qquad (III)$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol (soweit vorhanden).

Der Gewichtsanteil (in Gew.-%) an cyclischem Carbonat (CC') in der Reaktionsmischung wurde nach Formel (IV) berechnet,

$$CC' = \frac{F(4{,}5) * 102}{N} * 100\% \qquad (IV)$$

wobei sich der Wert für N nach Formel (III) berechnet.

Um aus den Werten der Zusammensetzung der Reaktionsmischung die Zusammensetzung bezogen auf den Polymer-Anteil (bestehend aus Polyetherpolyol, welches aus Starter und Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F = 44/(44+58) umgerechnet. Die Angabe des $CO_2$-Gehalts im Polyethercarbonatpolyol ist normiert auf den Anteil des Polyethercarbonatpolyol-Moleküls, das bei der Copolymerisation und ggf. den Aktivierungsschritten in Gegenwart von $CO_2$ gebildet wurde (d.h. der Anteil des Polyethercarbonatpolyol-Moleküls, der aus dem Starter (1,8-Octandiol, soweit vorhanden) sowie aus der Reaktion des Starters mit Epoxid resultiert, das unter $CO_2$-freien Bedingungen zugegeben wurde, wurde hierbei nicht berücksichtigt).

Beispielsweise umfasst die Herstellung von Polyethercarbonatpolyolen gemäß A1, indem:

(α) eine H-funktionelle Startersubstanz oder ein Gemisch aus mindestens zwei H-funktionellen Startersubstanzen

vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Gemisch von mindestens zwei H-funktionellen Startersubstanzen vor oder nach der Trocknung zugesetzt wird,

(β) zur Aktivierung eine Teilmenge (bezogen auf die Gesamtmenge der bei der Aktivierung und Copolymerisation eingesetzten Menge an Alkylenoxiden) von einem oder mehreren Alkylenoxiden zu der aus Schritt (α) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,

(γ) ein oder mehrere der Alkylenoxide und Kohlendioxid zu der aus Schritt (β) resultierenden Mischung zugesetzt werden, wobei die in Schritt (β) eingesetzten Alkylenoxide gleich oder verschieden sein können von den bei Schritt (γ) eingesetzten Alkylenoxiden.

Allgemein können zur Herstellung der Polyethercarbonatpolyole A1 Alkylenoxide (Epoxide) mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$ -Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkoxysilane, wie beispielsweise 3-Glycidyloxypropyltrimethoxysilan, 3-Glycidyioxypropyltriethoxysilan, 3-Glycidyloxypropyltripropoxysilan, 3 -Glycidyloxypropyl-methyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid und/oder 1,2 Butylenoxid, besonders bevorzugt Propylenoxid eingesetzt.

In einer bevorzugten Ausfuhrungsform der Erfindung liegt der Anteil an Ethylenoxid an der insgesamt eingesetzten Menge an Propylenoxid und Ethylenoxid $\geq 0$ und $\leq 90$ Gew.-%, bevorzugt $\geq 0$ und $\leq 50$ Gew.-% und besonders bevorzugt frei von Ethylenoxid.

Als geeignete H-funktionelle Startsubstanz können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und - $CO_2H$, bevorzugt sind -OH und $-NH_2$, besonders bevorzugt ist -OH. Als H-funktionelle Startersubstanz wird beispielsweise eine oder mehrere Verbindungen ausgewählt aus der Gruppe bestehend aus Wasser, ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, t-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-t-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, t-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielweise zweiwertige Alkohole

(wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton. In Mischungen von H-funktionellen Startern können auch dreiwertige Alkohole, wie beispielsweise Trimethylolpropan, Glycerin, Trishydroxyethylisocyanurat und Rizinusöl eingesetzt werden.

Die H-funktionellen Startersubstanzen können auch aus der Substanzklasse der Polyetherpolyole ausgewählt sein, insbesondere solchen mit einem Molekulargewicht $M_n$ im Bereich von 100 bis 4000 g/mol, vorzugsweise 250 bis 2000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Bayer MaterialScience AG (wie z. B. Desmophen® 3600Z, Desmophen® 1900U, Acclaim® Polyol 2200, Acclaim® Polyol 40001, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem Molekulargewicht $M_n$ im Bereich von 200 bis 4500 g/mol, vorzugsweise 400 bis 2500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophthalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Falls Polyetherpolyole zur Herstellung der Polyesteretherpolyole eingesetzt werden, sind Polyetherpolyole mit einem zahlenmittleren Molekulargewicht $M_n$ von 150 bis 2000 g/mol bevorzugt.

Des Weiteren können als H-funktionelle Startersubstanzen Polycarbonatpolyole (wie beispielsweise Polycarbonatdiole) eingesetzt werden, insbesondere solchen mit einem Molekulargewicht $M_n$ im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und di- und/oder polyfunktionellen Alkoholen oder Polyesterpolyolen oder Polyetherpolyolen hergestellt werden. Beispiele zu Polycarbonatpolyolen finden sich z. B. in der EP-A 1359177. Beispielsweise können als Polycarbonatdiole die Desmophen® C-Typen der Bayer MaterialScience AG verwendet werden, wie z. B. Desmophen® C 1100 oder Desmophen® C 2200. Ebenfalls können Polyethercarbonatpolyole als H-funktionelle Startersubstanzen eingesetzt werden. Insbesondere werden Polyethercarbonatpolyole, die nach dem oben beschriebenen Verfahren hergestellt werden, eingesetzt. Diese als H-funktionelle Startersubstanzen eingesetzten Polyethercarbonatpolyole werden hierzu in einem separaten Reaktionsschritt zuvor hergestellt.

Bevorzugte H-funktionelle Startersubstanzen sind Alkohole der allgemeinen Formel (V),

$$HO\text{-}(CH_2)_x\text{-}OH \qquad (V)$$

wobei x eine Zahl von 1 bis 20, bevorzugt eine gerade Zahl von 2 bis 20 ist. Beispiele für Alkohole gemäß Formel (V) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (V) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startsubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein zahlenmittleres Molekulargewicht $M_n$ im Bereich von 62 bis 4500 g/mol und insbesondere ein zahlenmittleres Molekulargewicht $M_n$ im Bereich von 62 bis 3000 g/mol, ganz besonders bevorzugt ein Molekulargewicht von 62 bis 1500 g/mol. Bevorzugt haben die Polyetherpolyole eine Funktionalität von ≥ 2 bis ≤ 3.

In einer bevorzugten Ausführungsform der Erfindung ist das Polyethercarbonatpolyol A1 durch Anlagerung von Kohlendioxid und Alkylenoxiden an H-funktionelle Startersubstanzen unter Verwendung von Multimetallcyanid-Katalysatoren (DMC-Katalysatoren) erhältlich. Die Herstellung von Polyethercarbonatpolyolen durch Anlagerung von Alkylenoxiden und $CO_2$ an H-funktionelle Startersubstanzen unter Verwendung von DMC-Katalysatoren ist beispielsweise aus der EP-A 0222453, WO-A 2008/013731 und EP-A 2115032 bekannt.

DMC-Katalysatoren sind im Prinzip aus dem Stand der Technik zur Homopolymerisation von Epoxiden bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO-A 97/40086, WO-A 98/16310 und WO-A 00/47649 beschrieben sind, besitzen eine sehr hohe Aktivität in der Homopolymerisation von Epoxiden und ermöglichen die Herstellung von Polyetherpolyolen und/oder Polyethercarbonatpolyolen bei sehr geringen Katalysatorkonzentrationen (25 ppm oder weniger). Ein typisches Beispiel sind die in EP-A 700949 beschriebenen hochaktiven DMC-Katalysatoren, die neben einer Doppelmetallcyanid-Verbindung (z.B. Zinkhexacyanocobaltat(III)) und einem organischen Komplexliganden (z.B. t.-Butanol) noch einen Polyether mit einem zahlenmittlerem Molekulargewicht $M_n$ größer als 500 g/mol enthalten.

Der DMC-Katalysator wird zumeist in einer Menge von ≤ 1 Gew.-%, vorzugsweise in einer Menge von ≤ 0,5 Gew.-%, besonders bevorzugt in einer Menge von ≤ 500 ppm und insbesondere in einer Menge von ≤ 300 ppm, jeweils bezogen auf das Gewicht des Polyethercarbonatpolyols eingesetzt.

In einer bevorzugten Ausführungsform der Erfindung weist das Polyethercarbonatpolyol A1 einen Gehalt an Carbonatgruppen ("aus Kohlendioxid stammenden Einheiten"), berechnet als $CO_2$, von ≥ 2,0 und ≤ 30,0 Gew.-%, bevorzugt von ≥ 5,0 und ≤ 28,0 Gew.-% und besonders bevorzugt von ≥ 10,0 und ≤ 25,0 Gew.-% auf.

In einer weiteren Ausführungsform des erfindungsgemäßen Verfahrens weisen das oder die Polyethercarbonatpolyole gemäß A1 eine Hydroxylzahl von ≥ 20 mg KOH/g bis ≤ 250 mg KOH/g auf und sind erhältlich durch Copolymerisation von ≥ 2,0 Gew.-% bis ≤ 30,0 Gew.-% Kohlendioxid und ≥ 70 Gew.-% bis ≤ 98 Gew.-% Propylenoxid in Gegenwart eines hydroxyfunktionellen Startermolekül, wie beispielsweise Trimethylolpropan und/oder Glycerin und/oder Propylenglykol und/oder Sorbitol. Die Hydroxylzahl kann gemäß DIN 53240 bestimmt werden.

In einer weiteren Ausführungsform wird ein Polyethercarbonatpolyol A1 eingesetzt, enthaltend Blöcke gemäß Formel (IX) wobei das Verhältnis e/f von 2:1 bis 1 : 20 beträgt.

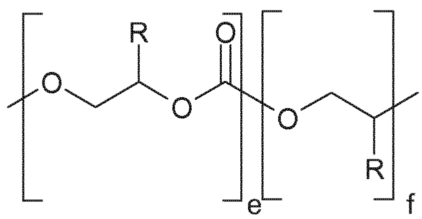

(IX)

In einer weiteren Ausfuhrungsform der Erfindung wird Komponente A1 zu 100 Gew.-Teilen eingesetzt.

Komponente A2

Die Komponente A2 umfasst Polyetherpolyole mit einer Hydroxylzahl gemäß DIN 53240 von ≥ 20 mg KOH/g bis ≤ 250 mg KOH/g, vorzugsweise von ≥ 20 bis ≤ 112 mg KOH/g und besonders bevorzugt ≥ 20 mg KOH/g bis ≤ 80 mg KOH/g und ist frei von Carbonateinheiten. Die Herstellung der Verbindungen gemäß A2 kann durch katalytische Addition von einem oder mehreren Alkylenoxiden an H-funktionelle Starterverbindungen erfolgen.

Als Alkylenoxide (Epoxide) können Alkylenoxide mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid,

2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkyoxysilane, wie beispielsweise 3 -Glycidyloxypropyltrimethoxysilan, 3 -Glycidyioxypropyltriethoxysilan, 3 -Glycidyloxypropyltripropoxysilan, 3 -Glycidyloxypropyl-methyl-dimethoxysilan, 3 -Glycidyloxypropylethyldiethoxysilan, 3-Glycidyloxypropyltrlisopropoxysilan. Vorzugsweise werden als Alkylenoxide Ethylenoxid und/oder Propylenoxid und/oder 1,2 Butylenoxid eingesetzt. Besonders bevorzugt wird ein Überschuss an Propylenoxid und/oder 1,2-Butylenoxid eingesetzt. Die Alkylenoxide können dem Reaktionsgemisch einzeln, im Gemisch oder nacheinander zugeführt werden. Es kann sich um statistische oder um Block-Copolymere handeln. Werden die Alkylenoxide nacheinander dosiert, so enthalten die hergestellten Produkte (Polyetherpolyole) Polyetherketten mit Blockstrukturen.

Die H-funktionellen Starterverbindungen weisen Funktionalitäten von ≥ 2 bis ≤ 6 auf und sind vorzugsweise hydroxyfunktionell (OH-funktionell). Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Vorzugsweise wird als Starterverbindung 1,2-Propylenglykol und /oder Glycerin und/oder Trimethylolpropan und /oder Sorbitol eingesetzt.

Die Polyetherpolyole gemäß A2 weisen vorzugsweise einen Gehalt von ≥ 0 bis ≤ 40 Gew.-%, besonders bevorzugt ≥ 0 bis ≤ 25 Gew.-% an Ethylenoxid auf.

Komponente A3

Als Komponente A3 werden 0,5 bis 25 Gew.-Teile, bevorzugt 1,0 bis 15 Gew. Teile, besonders bevorzugt 1,5 bis 10 Gew.-Teile, bezogen auf die Summe der Gew.-Teile der Komponenten A1 und A2, Wasser und/oder physikalische Treibmittel eingesetzt. Als physikalische Treibmittel werden beispielsweise Kohlendioxid und/oder leicht flüchtige organische Substanzen als Treibmittel eingesetzt. Vorzugsweise wird Wasser als Komponente A3 eingesetzt.

Komponente A4

Antioxidantien, die in der Herstellung von Polyurethan-Weichschaumstoffen eingesetzt werden können sind dem Fachmann an sich bekannt. Solche Verbindungen werden beispielsweise in EP-A 1874853, G. Oertel (Hrsg.): "Kunststoff-Handbuch", Band VII, Carl-Hanser-Verlag, München, Wien 1993, Kapitel 3.4.8 oder in Ullmanns's Encyclopedia of Industrial Chemistry Peter P. Klemchuck, 2012, Vol. 4, S. 162 ff, Wiley VCH-Verlag beschrieben.
Erfindungsgemäß umfasst Komponente A ein Antioxidans A4, welches mindestens eine Verbindung der Formel

HNR1R2 (VI),

worin R1 C1-C18 Alkyl, Phenyl-C1-C4-alkyl, C-5-C12-Cycloalkyl, Phenyl, Naphthyl, Phenyl oder Naphthyl von denen jedes substituiert ist durch C1-C12 Alkyl oder C1-C12 Alkoxy oder Benzyl oder α,α-Dimethylbenzyl, entspricht, und R2 Phenyl, Naphthyl, Phenyl oder Naphthyl, von denen jedes substituiert ist durch C1-C12 Alkyl oder C1-C12 Alkoxy oder Benzyl oder α,α-Dimethylbenzyl, entspricht, umfasst.

Geeignete Antioxidantien A4 sind beispielsweise N,N'-Di-isopropyl-p-phenylendiamin, N,N'-Di-sec-butyl-p-phenylendiamin, N, N'-Bis(1,4-dimethyloentyl)-p-phenylen-diamin, N, N'-Bis(1-ethyl-3-methylpentyl)-p-phenylendiamin, N,N'-Bis(1-methylheptyl)-p-phenylendiamin, N,N'-Dicyclohexxyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylendiamin, N-(1-Methylheptyl)-N'-phenyl-p-phenylendiamin, N-Cyclohexyl-N'-phenyl-p-phenylendiamin, 4-(p-Toluensulfamoyl)diphenylamin, N,N'-Dimethyl-N,N'-di-sec-butyl-p-phenylendiamin, Diphenylamin, N-Allyldiphenylamin, 4-Isopropoxydiphenylamin, N-phenyl-1-naphthylamin, N-(4-t-Octylphenyl)-1-naphthylamin, N-Phenyl-2-naphthylamin, octyliertes Diphenylamin, beispielsweise p,p'-Di-t-octyldiphenylamin, 4-n-Butylaminophenol, 4-Butyrylaminophenol, 4-Nonanoylaminophenol, 4-Dodecanoylaminophenol, 4-Octadecanoylaminophenol, Bis(4-methoxyphenyl)amin, 2,6-Di-t-butyl-4-dimethylaminomethylphenol, 2,4' -Diaminodiphenylmethan, 4,4' -Diaminodiphenylmethan, N,N,N',N'-Tetramethyl-4,4'-diaminodiphenylmethan, 1,2-Bis[(2-methylphenyl)amino]ethan, 1,2-Bis(phenylamino)propan, (o-Tolyl)biguanid, Bis[4-(1',3'-dimethylbutyl)phenyl]amin, t-octyliertes N-phenyl-1-naphthylamin, eine Mischung von mono- und dialkylierten t-Butyl/t-octyldiphenylaminen, eine Mischung aus mono- und dialkylierten Nonyldiphenylaminen, eine Mischung aus mono- und dialkylierten Dodecyldiphenylaminen, eine Mischung aus mono- und dialkylierten Isopropyl/Isohexyldiphenylaminen, eine Mischung aus mono- und dialkylierten t-Butyldiphenylaminen, 2,3-Dihydro-3,3-dimethyl-4H-1,4-benzothiazin Phenothiazin, eine Mischung aus mono- und dialkylierten t-Butyl/t-Octylphenothiazinen, eine Mischung aus mono- und dialkylierten t-Octyl-phenothiazinen, N-Allylphenothiazin und/oder N,N,N',N'-Tetraphenyl-1,4-diaminobut-2-en, bevorzugt ist eine Mischung von mono- und dialkylierten t-Butyl/t-octyldiphenylaminen, eine Mischung aus mono- und dialkylierten Nonyldiphenylaminen, eine Mischung aus mono- und dialkylierten Dodecyldiphenylaminen, eine Mischung aus mono- und dialkylierten Isopropyl/Isohexyldiphenylaminen, eine Mischung aus mono- und dialkylierten t-Butyldiphenylaminen.

In einer weiteren Ausfuhrungsform werden Antioxidans A4 in einer Menge von 0,02 - 3,0 Gew.-Teile, bevorzugt 0,04 - 2,0 Gew.-Teile, besonders bevorzugt 0,05 - 1,5 Gew.-Teile, bezogen auf die Summe der Gew.-Teile der Komponenten A1 und A2 eingesetzt.

In einer weiteren Ausführungsform erfolgt das erfindungsgemäße Verfahren in Gegenwart von

A4 0,02 - 3,0 Gew.-Teile, bevorzugt 0,04 - 2,0 Gew.-Teile, besonders bevorzugt 0,05 - 1,5 Gew.-Teile, bezogen auf die Summe der Gew.-Teile der Komponenten A1 und A2, mindestens einer Verbindung oder Mischung ausgewählt aus der Gruppe bestehend aus N,N'-Di-isopropyl-p-phenylendiamin, N,N'-Di-sec-butyl-p-phenylendiamin, N, N'-Bis(1,4-dimethyloentyl)-p-phenylen-diamin, N, N'-Bis(1-ethyl-3-methylpentyl)-p-phenylendiamin, N,N'-Bis(1-methylheptyl)-p-phenylendiamin, N,N'-Dicyclohexxyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylendiamin, N-(1-Methylheptyl)-N'-phenyl-p-phenylendiamin, N-Cyclohexyl-N'-phenyl-p-phenylendiamin, 4-(p-Toluensulfamoyl)diphenylamin, N,N'-Dimethyl-N,N'-di-sec-butyl-p-phenylendiamin, Diphenylamin, N-Allyldiphenylamin, 4-Isopropoxydiphenylamin, N-phenyl-1-naphthylamin, N-(4-t-Octylphenyl)-1-naphthylamin, N-Phenyl-2-naphthylamin, octyliertes Diphenylamin, beispielsweise p,p'-Di-t-octyldiphenylamin, 4-n-Butylaminophenol, 4-Butyrylaminophenol, 4-Nonanoylaminophenol, 4-Dodecanoylaminophenol, 4-Octadecanoylaminophenol, Bis(4-methoxyphenyl)amin, 2,6-Di-t-butyl-4-dimethylaminomethylphenol, 2,4'-Diaminodiphenylmethan, 4,4' -Diaminodiphenylmethan, N,N,N',N'-Tetramethyl-4,4'-diaminodiphenylmethan, 1,2-Bis[(2-methylphenyl)amino]ethan, 1,2-Bis(phenylamino)propan, (o-Tolyl)biguanid, Bis[4-(1',3'-dimethylbutyl)phenyl]amin, t-octyliertes N-phenyl-1-naphthylamin, einer Mischung von mono- und dialkylierten t-Butyl/t-octyldiphenylaminen, einer Mischung aus mono- und dialkylierten Nonyldiphenylaminen, einer Mischung aus mono- und dialkylierten Dodecyldiphenylaminen, einer Mischung aus mono- und dialkylierten Isopropyl/Isohexyldiphenylaminen, einer Mischung aus mono- und dialkylierten t-Butyldiphenylaminen, 2,3-Dihydro-3,3-dimethyl-4H-1,4-benzothiazin, Phenothiazin, einer Mischung aus mono- und dialkylierten t-Butyl/t-Octylphenothiazinen, sowie einer Mischung aus mono- und dialkylierten t-Octyl-phenothiazinen, N-Allylphenothiazin und/oder N,N,N',N'-Tetraphenyl-1,4-diaminobut-2-en.

In einer weiteren Ausführungsform erfolgt das erfindungsgemäße Verfahren in Gegenwart von

A4 0,02 - 3,0 Gew.-Teile, , bevorzugt 0,04 - 2,0 Gew.-Teile, besonders bevorzugt 0,05-1,5 Gew.-Teile, bezogen auf die Summe der Gew.-Teile der Komponenten A1 und A2, mindestens einer Mischung ausgewählt aus der Gruppe bestehend aus einer Mischung aus mono- und dialkylierten t-Butyl/tert-octyldiphenylaminen, einer Mischung aus mono- und dialkylierten Nonyldiphenylaminen, einer Mischung aus mono- und dialkylierten Dodecyldiphenylaminen, einer Mischung aus mono- und dialkylierten Isopropyl/Isohexyldiphenylaminen, einer Mischung aus mono- und dialkylierten t-Butyldiphenylaminen.

Gemäß einer Ausführungsform des erfindungsgemäßen Verfahrens darf Komponente A neben Antioxidans A4 keine anderen Antioxidantien enthalten und gemäß einer weiteren Ausführungsform darf Komponente A neben Antioxidans A4 keine Antioxidantien enthalten, die eine Verbindung oder mehrere Verbindungen umfassen ausgewählt aus der Gruppe

i) Phenol-Derivate
ii) Lactone, insbesondere Benzofuran-2-on-derivate und
iii) Phosphor-Derivate.

<u>Komponente A5</u>

Als Komponente A5 werden 0,1 bis 8,1 Gew.-Teile, bevorzugt 0,1 bis 7,5 Gew.-Teile, besonders bevorzugt 0,15 bis 7,0 Gew.-Teile, bezogen auf die Summe der Gew.-Teile der Komponenten A1 und A2, Hilfs- und Zusatzstoffe wie

a) Katalysatoren,

b) oberflächenaktive Zusatzstoffe, wie Emulgatoren und Schaumstabilisatoren insbesondere solche mit niedriger Emission wie beispielsweise Produkte der Tegostab® LF-Serie

c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise Trikresylphosphat oder Ammoniumpolyphosphat), weitere Stabilisatoren gegen Alterungs- und Witterungseinflüsse, wobei es sich nicht um solche der Komponente A4 handelt, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Als Katalysatoren werden bevorzugt aliphatische tertiäre Amine (beispielsweise Trimethylamin, Triethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe, siehe zum Beispiel EP-A 0 176 013, insbesondere (3-Dimethylaminopropylamin)-harnstoff) und Zinn-Katalysatoren (wie beispielsweise Dibutylzinnoxid, Dibutylzinndilaurat, Zinn(II)-ethylhexanoat, Zinnricinoleat) eingesetzt.

<u>Komponente B</u>

Geeignete Di- und/oder Polyisocyanate sind aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel (III)

$$Q(NCO)_n, \qquad (VII)$$

in der
n = 2 - 4, vorzugsweise 2 -3, und

Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP-A 0 007 502, Seiten 7 - 8, beschrieben werden. Bevorzugt werden in der Regel die technisch leicht zugänglichen Polyisocyanate, zum Beispiel das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird als Polyisocyanat eine Verbindung ausgewählt aus der Gruppe bestehend aus 2,4- und 2,6-Toluylendiisocyanat, 4,4'- und 2,4'- und 2,2'-Diphenylmethandiisocyanat und/oder Polyphenylpolymethylenpolyisocyanat ("Mehrkern-MDI") eingesetzt.

In einer weiteren Ausführungsform des erfindungsgemäßen Verfahrens umfasst die Isocyanat-Komponente B ein Toluylendiisocyanat- Isomerengemisch aus 55 bis 90 Gew.-% 2,4- und 10 bis 45 Gew.-% 2,6-TDI.

In einer weiteren Ausfuhrungsform des erfindungsgemäßen Verfahrens beträgt die Kennzahl ≥ 70 bis ≤ 130, vorzugsweise ≥ 85 bis ≤ 125, besonders bevorzugt ≥ 90 bis ≤ 120. Die Kennzahl (Index) gibt das prozentuale Verhältnis der tatsächlich eingesetzten Isocyanat-Menge zur stöchiometrischen, d.h. für die Umsetzung der OH-Äquivalente berechnete Menge an IsocyanatGruppen (NCO)-Menge an.

$$\text{Kennzahl} = [\text{Isocyanat-Menge eingesetzt}) : (\text{Isocyanat-Menge berechnet}) \bullet 100 \qquad (VIII)$$

Die nach der Erfindung erhältlichen Polyurethanschaumstoffe vorzugsweise Polyurethanweichschaumstoffe, finden beispielsweise folgende Anwendung: Möbelpolsterungen, Textileinlagen, Matratzen, Automobilsitze, Kopfstützen, Armlehnen, Schwämme, Schaumstofffolien zur Verwendung in Automobilteilen wie beispielsweise Dachhimmeln, Türseitenverkleidungen, Sitzauflagen und Bauelementen.

**Beispiele**

Polyol A1-1: trifunktionelles Polyethercarbonatpolyol auf Basis Glycerin mit Hydroxylzahl 50 mg KOH/g, erhalten durch Copolymerisation von 15 Gew.-% Kohlendioxid mit 85 Gew.-% Propylenoxid. Verhältnis e/f=1:3,8

Polyol A2-1: trifunktionelles Polyetherpolyol auf Basis Glycerin mit Hydroxylzahl 56 mg KOH/g, erhalten durch Copolymerisation von 13 Gew.-% Ethylenoxid mit 87 Gew.-% Propylenoxid.

A5-1 (Stabilisator): Siloxan-basierter Schaumstabilisator Tegostab® BF 2370, (Evonik Goldschmidt GmbH, Essen)

Antioxidans A4.1-1 (aminisch): octyliertes Diphenylamin, erhältlich als Irganox® 5057 (BASF SE, Ludwigshafen)

Antioxidans A4.1-2 (aminisch): 4,4'-Bis($\alpha$,$\alpha$-dimethylbenzyl)diphenylamin, erhältlich als Naugard 445, Addivant Deutschland GmbH, Waldkraiburg

Antioxidans A4.2-1 (aminfrei): Irgastab® PUR 68 (BASF SE, Ludwigshafen), lt. Sicherheitsdatenblatt eine Mischung aus

a) einem phenolischen Antioxidans, namentlich 3-(3,5-di-t-butyl-4-hydroxyphenyl)propansäure-estern von aliphatischen, verzweigten Alkoholen mit 7-9 Kohlenstoffatomen
b) einem Phosphorderivat, namentlich Bis[2,4-bis(1,1Dimethylethyl)-6-methylphenylphosphorsäureethylester
c) einem Lacton, namentlich 3-[2-[Acetyloxy)-5-(1,1,3,3-tetramethylbutyl)-phenyl]-5-(1,1,3,3-tetramethylbutyl)-(9CI)-2(3H)- Benzofuranon,

Antioxidans A4.2-2 (phenolisch): 3-(3,5-di-t-butyl-4-hydroxyphenyl)propansäure-octadecylester, erhältlich als Irganox® 1076 (BASF SE, Ludwigshafen)

Isocyanat B-1: Gemisch aus 80 Gew.-% 2,4- und 20 Gew.-% 2,6-Toluylendiisocyanat, erhältlich unter dem Namen Desmodur® T 80, (Bayer MaterialScience AG, Leverkusen)

A5-2 (Katalysator): Bis-(2-dimethylamino-ethyl)-ether in Dipropylenglykol, erhältlich als Addocat® 108, (Rheinchemie Rheinau GmbH, Mannheim)

A5-3 (Katalysator): Zinn(11)-ethylhexanoat, erhältlich als Dabco® T-9, (Air Products GmbH, Hamburg)

Die Hydroxylzahl wurde gemäß DIN 53240 bestimmt.

Aus dem $CO_2$-Gehalt, der Hydroxylzahl und dem eingesetzten Starter wurde für das Polyethercarbonatpolyol A1 das Verhältnis e/f (siehe Formel (IX)) berechnet.

Es wurden Polyurethanschäume gemäß den in der nachfolgenden Tabelle angegebenen Rezepturen hergestellt. Unmittelbar nach dem Aufschäumvorgang wurden die Schaumkörper 15 Minuten lang in einem Mikrowellenofen (Fa. Panasonic, Modell NE-1440) mit 170 W Mikrowellenstrahlungsleistung bestrahlt und anschließend 15 Minuten in einem Umlufttrockenschrank bei 130 °C gelagert. Nach Abkühlen wurden die Schaumkörper in der Mitte zur Längsachse zerschnitten und der oxidative Abbau anhand der Verfärbung des Schaumkerns gemessen, indem mithilfe eines Farbmessgeräts (Fa. Dr. Lange) der Yellowness Index ermittelt wurde. Ein geringer Yellowness Index zeigt eine geringe Verfärbung und damit auch einen geringeren oxidativen Abbau an.

Aufgeführt sind die Anteile der Komponenten in Gewichts-Teilen. Beispiel 1 ist ein erfindungsgemäßes Beispiel, die Beispiele 2 bis 7 sind Vergleichsbeispiele. In den Beispielen 5-7 (Vergleich) wurde ein Polyetherpolyol eingesetzt, welches keine Polycarbonateinheiten enthält.

**Tabelle 1:** Polyurethan-Weichschaumstoffe

| **Beispiel** | **1** | **2** | **3 (Vgl.)** | **4 (Vgl.)** | **5 (Vgl.)** | **6 (Vgl.)** | **7 (Vgl.)** | **8 (Vgl.)** | **9** | **10** | **11** |
|---|---|---|---|---|---|---|---|---|---|---|---|
| A1-1 | 100 | 100 | 100 | 100 | 100 | | | | 50 | 20 | |
| A2-1 | | | | | | 100 | 100 | 100 | 50 | 80 | 100 |
| A4.1-1 | 0,20 | 0,40 | | | 0,20 | 0,20 | | 0,40 | 0,40 | 0,20 | |
| A4.1-2 | | | | | | | | | | 0,20 | 0,40 |
| A4.2-1 | | | | 0,40 | | | 0,40 | | | | |
| A4.2-2 | | | | | 0,20 | 0,20 | | | | | |
| A5-1 | 1,50 | 1,5 | 1,50 | 1,50 | 1,50 | 1,50 | 1,50 | 1,50 | 1,50 | 1,50 | 1,50 |
| A5-2 | 0,10 | 0,10 | 0,10 | 0,10 | 0,10 | 0,10 | 0,10 | 0,10 | 0,10 | 0,10 | 0,10 |
| A5-3 | 0,15 | 0,15 | 0,15 | 0,15 | 0,15 | 0,15 | 0,15 | 0,15 | 0,15 | 0,15 | 0,15 |
| Wasser A3 | 6,0 | 6,0 | 6,0 | 6,0 | 6,0 | 6,0 | 6,0 | 6,0 | 6,0 | 6,0 | 6,0 |
| Isocyanat B-1 | 71,0 | 71,0 | 71,0 | 71,0 | 71,0 | 72,0 | 72,0 | 72,0 | 71,5 | 71,2 | 71,0 |
| NCO-Index | 108 | 108 | 108 | 108 | 108 | 108 | 108 | 108 | 108 | 108 | 108 |
| Yellowness Index (Verfärbung im Schauminneren) | 48,4 | 40,4 | 74,0 | 94,3 | 64,8 | 43,5 | 3,4 | 48 | 40,6 | 58 | 53 |

Die Ergebnisse belegen, dass mit der erfindungsgemäßen Stabilisierung in Beispiel 1 und 2 eine verbesserte Schutzwirkung gegenüber oxidativem Abbau beobachtet wird als bei den in den Vergleichsbeispielen 4 und 5 verwendeten Stabilisierungen bzw. ohne Stabilisierung in Beispiel 3.

Die Vergleichsbeispiele 6 bis 8 wurden mit einem konventionellen Polyol hergestellt. Diese Beispiele belegen, dass das Antioxidans nicht in der gleichen Weise Einfluss auf die Verfärbung im Schauminneren nimmt wie im Falle von Polyurethan-Weichschaumstoffen, die mit Polyethercarbonatpolyolen hergestellt wurden.

## Patentansprüche

1. Verfahren zur Herstellung von Polyurethanschaumstoffen, vorzugsweise Polyurethanweichschaumstoffen durch Umsetzung von Komponente A enthaltend

   A1 ≥ 50 bis ≤ 100 Gew.-Teile eines Polyethercarbonatpolyols mit einer Hydroxylzahl gemäß DIN 53240 von ≥ 20 mg KOH/g bis ≤ 250 mg KOH/g
   A2 ≤ 50 bis ≥ 0 Gew.-Teile eines Polyetherpolyols mit einer Hydroxylzahl gemäß DIN 53240 von ≥ 20 mg KOH/g bis ≤ 250 mg KOH/g, wobei das Polyetherpolyol frei von Carbonateinheiten ist,
   A3 0,5 bis 25 Gew.-Teile, bezogen auf die Summe der Gew.-Teile der Komponenten A1 und A2, Wasser und/oder physikalische Treibmittel,
   A4 0,02 - 3,0 Gew.-Teile, bezogen auf die Summe der Gew.-Teile der Komponenten A1 und A2, eines Antioxidans, welches mindestens eine Verbindung der Formel

   HNR1R2 (VI)

   worin R1 C1-C18 Alkyl, Phenyl-C1-C4-alkyl, C5-C12-Cycloalkyl, Phenyl, Naphthyl, Phenyl oder Naphthyl von denen jedes substituiert ist durch C1-C12 Alkyl oder C1-C12 Alkoxy oder Benzyl oder $\alpha,\alpha$-Dimethylbenzyl entspricht, und R2 Phenyl, Naphthyl, Phenyl oder Naphthyl, von denen jedes substituiert ist durch C1-C12 Alkyl oder C1-C12 Alkoxy oder Benzyl oder $\alpha,\alpha$-Dimethylbenzyl, entspricht, umfasst,
   A5 0,1 bis 8,1 Gew.-Teile, bezogen auf die Summe der Gew.-Teile der Komponenten A1 und A2, Hilfs- und Zusatzstoffe,

   mit Komponente B enthaltend Di- und/oder Polyisocyanate,
   wobei die Herstellung bei einer Kennzahl von 70 bis 130 erfolgt,
   wobei alle Gewichtsteilangaben der Komponenten A1 bis A5 so normiert sind, dass die Summe der Gewichtsteile A1 + A2 in der Zusammensetzung 100 ergibt, und wobei

   a) Komponente A neben dem Antioxidans A4 keine anderen Antioxdantien enthält, oder
   b) Komponente A neben dem Antioxidans A4 keine Antioxdantien enthält, die eine Verbindung oder mehrere Verbindungen umfassen ausgewählt aus der Gruppe

      i) Phenol-Derivate
      ii) Lactone
      iii) Phosphor-Derivate.

2. Verfahren gemäß Anspruch 1, wobei 100 Gew.-Teile A1 eingesetzt werden.

3. Verfahren gemäß Anspruch 1 oder 2, wobei Antioxidans A4 mindestens eine Verbindung oder Mischung aus der Gruppe bestehend aus N,N'-Di-isopropyl-p-phenylendiamin, N,N'-Di-sec-butyl-p-phenylendiamin, N,N'-Bis(1,4-dimethyloentyl)-p-phenylen-diamin, N,N'-Bis(1-ethyl-3-methylpentyl)-p-phenylendiamin, N,N'-Bis(1-methylheptyl)-p-phenylendiamin, N,N'-Dicyclohexxyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylendiamin, N-(1-Metliylheptyl)-N'-phenyl-p-phenylendiamin, N-Cyclohexyl-N'-phenyl-p-phenylendiamin, 4-(p-Toluensulfamoyl)diphenylamin, N,N'-Dimethyl-N,N'-di-sec-butyl-p-phenylendiamin, Diphenylamin, N-Allyldiphenylamin, 4-Isopropoxydiphenylamin, N-phenyl-1-naphthylamin, N-(4-t-Octylphenyl)-1-naphthylamin, N-Phenyl-2-naphthylamin, octyliertes Diphenylamin, 4-n-Butylaminophenol, 4-Butyrylaminophenol, 4-Nonanoylaminophenol, 4-Dodecanoylaminophenol, 4-Octadecanoylaminophenol, Bis(4-methoxyphenyl)amin, 2,6-Di-t-butyl-4-dimethylaminomethylphenol, 2,4'-Diaminodiphenylmethan, 4,4'-Diaminodiphenylmethan, N,N,N',N'-Tetramethyl-4,4'-diaminodiphenylmethan, 1,2-Bis[(2-methylphenyl)amino]ethan, 1,2-Bis(phenylamino)propan, (o-Tolyl)biguanid, Bis[4-(1',3'-dimethylbutyl)phenyl]amin, t-octyliertes N-phenyl-1-naphthylamin, einer Mischung von mono- und dialkylierten t-Butyl/t-octyldiphenylaminen, einer Mischung aus mono- und dialkylierten Nonyldiphenylaminen, einer Mischung aus mono- und dialkylierten Dodecyldiphenylaminen, einer Mischung aus mono- und dialkylierten Isopropyl/Isohexyldiphenylaminen, einer Mischung aus mono- und dialkylierten t-Butyldiphenylaminen, 2,3-Dihydro-3,3-dimethyl-4H-1 ,4-benzothiazin, Phenothiazin, einer Mischung aus mono- und dialkylierten t-Butyl/t-Octylphenothiazinen sowie einer Mischung aus mono- und dialkylierten t-Octyl-phenothiazinen, N-Allylphenothiazin und/oder N,N,N',N'-Tetraphenyl-1,4-diaminobut-2-en umfasst.

4. Verfahren gemäß Anspruch 1 bis 3, wobei Antioxidans A4 mindestens eine Mischung aus der Gruppe bestehend aus einer Mischung von mono- und dialkylierten t-Butyl/tertoctyldiphenylaminen, einer Mischung aus mono- und dialkylierten Nonyldiphenylaminen, einer Mischung aus mono- und dialkylierten Dodecyldiphenylaminen, einer Mischung aus mono- und dialkylierten Isopropyl/Isohexyldiphenylaminen und einer Mischung aus mono- und dialkylierten t-Butyldiphenylaminen umfasst.

5. Verfahren gemäß Anspruch 1 bis 4, wobei Antioxidans A4 in einer Menge von 0,05 - 1,5 Gew.-Teile, bezogen auf die Summe der Gewichtsteile der Komponente A1 und A2, enthalten sind.

6. Verfahren gemäß Anspruch 1 bis 5, wobei das Polyethercarbonatpolyol A1 erhältlich ist durch Copolymerisation von

$\geq$ 2 Gew.-% bis $\leq$ 30 Gew.-% Kohlendioxid und $\geq$ 70 Gew.-% bis $\leq$ 98 Gew.-% einem oder mehreren Alkylenoxiden in Gegenwart eines oder mehrerer H-funktioneller Startermoleküle mit einer durchschnittlichen Funktionalität von $\geq$ 1 bis $\leq$ 6, bevorzugt $\geq$ 1 bis $\leq$ 4, besonders bevorzugt $\geq$ 2 bis $\leq$ 3.

7. Verfahren gemäß Anspruch 1 bis 6, wobei das Polyethercarbonatpolyol A1 erhältlich ist unter Verwendung von Multimetallcyanid-Katalysatoren (DMC-Katalysatoren).

8. Verfahren gemäß Anspruch 1 bis 7, wobei das Polyethercarbonatpolyol A1 erhältlich ist unter Verwendung von Ethylenoxid und/oder Propylenoxid.

9. Verfahren gemäß Anspruch 1 bis 8, wobei das Polyethercarbonatpolyol A1 erhältlich ist unter Verwendung von Propylenoxid.

10. Verfahren gemäß Anspruch 1 bis 9, wobei das Polyethercarbonatpolyol A1 Blöcke gemäß Formel (IX) mit einem Verhältnis e/f von 2: 1 bis 1: 20 aufweist.

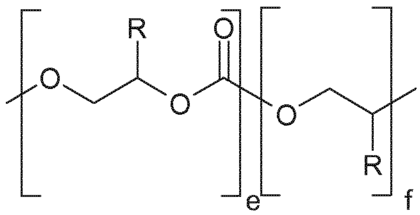

(IX)

11. Verfahren gemäß einem der Ansprüche 1 bis 10, wobei die Komponente B 2,4-, 2,6-Toluylendiisocyanat (TDI), 4,4'-, 2,4'-, 2,2'-Diphenylmethandiisocyanat (MDI) und/oder Polyphenylpolymethylenpolyisocyanat ("Mehrkem-MDI") umfasst.

12. Polyurethanweichschaumstoff erhältlich durch ein Verfahren gemäß Anspruch 1 bis 11.

13. Verwendung des Polyurethanweichschaums gemäß Anspruch 12 zur Herstellung von Möbelpolsterungen, Textileinlagen, Matratzen, Automobilsitze, Kopfstützen, Armlehnen, Schwämme, Schaumstofffolien zur Verwendung in Automobilteilen wie beispielsweise Dachhimmeln, Türseitenverkleidungen, Sitzauflagen und Bauelementen.

## Claims

1. Process for producing polyurethane foams, preferably flexible polyurethane foams, by reaction of component A comprising

A1 ≥ 50 to ≤ 100 parts by wt of a polyether carbonate polyol having a hydroxyl number according to DIN 53240 of ≥ 20 mg KOH/g to ≤ 250 mg KOH/g,
A2 ≤ 50 to ≥ 0 parts by wt of a polyether polyol having a hydroxyl number according to DIN 53240 of ≥ 20 mg KOH/g to ≤ 250 mg KOH/g, wherein the polyether polyol is free from carbonate units,
A3 0.5 to 25 parts by wt, based on the sum of the parts by wt of components A1 and A2, of water and/or physical blowing agents,
A4 0.02 - 3.0 parts by wt, based on the sum of the parts by wt of components A1 and A2, of an antioxidant which comprises at least one compound of the formula

HNR1R2 (VI)

where R1 represents C1-C18 alkyl, phenyl-C1-C4-alkyl, C5-C12-cycloalkyl, phenyl, naphthyl, phenyl or naphthyl, each of which is substituted by C1-C12 alkyl or C1-C12 alkoxy or benzyl or α,α-dimethylbenzyl and R2 represents phenyl, naphthyl, phenyl or naphthyl, each of which is substituted by C1-C12 alkyl or C1-C12 alkoxy or benzyl or α,α-dimethylbenzyl,
A5 0.1 to 8.1 parts by wt, based on the sum of the parts by wt of components A1 and A2, of auxiliary and added substances,

with component B comprising di- and/or polyisocyanates,
wherein production is effected at an index of 70 to 130,
wherein all reported parts by weight for components A1 to A5 are normalized such that the sum of the parts by weight A1 + A2 in the composition amounts to 100, and wherein

a) component A besides antioxidant A4 contains no other antioxidants, or
b) component A besides antioxidant A4 contains no antioxidants comprising one or more compounds selected from the group

i) phenol derivatives
ii) lactones
iii) phosphorus derivatives.

2. Process according to Claim 1, wherein 100 parts by wt of A1 are employed.

3. Process according to Claim 1 or 2, wherein antioxidant A4 comprises at least one compound or mixture from the group consisting of N,N'-diisopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-t-octylphenyl)-1-naphthylamine, N-phenyl-2-naphthylamine, octylated diphenylamine, 4-n-butylaminophenol, 4-butyrylaminophenol, 4-nonanoylaminophenol, 4-dodecanoylaminophenol, 4-octadecanoylaminophenol, bis(4-methoxyphenyl)amine, 2,6-di-t-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)aminolethane, 1,2-bis(phenylamino)propane, (o-tolyl)biguanide, bis[4-(1',3'-dimethylbutyl)phenyl]amine, t-octylated N-phenyl-1-naphthylamine, a mixture of mono- and dialkylated t-butyl/t-octyldiphenylamines, a mixture of mono- and dialkylated nonyldiphenylamines, a mixture of mono- and dialkylated dodecyldiphenylamines, a mixture of mono- and dialkylated isopropyl/isohexyldiphenylamines, a mixture of mono- and dialkylated t-butyldiphenylamines, 2,3-dihydro-3,3-dimethyl-4H-1,4-benzothiazine, phenothiazine, a mixture of mono- and dialkylated t-butyl/t-octylphenothiazines and also a mixture of mono- and dialkylated t-octylphenothiazines, N-allylphenothiazine and/or N,N,N',N'-tetraphenyl-1,4-diaminobut-2-ene.

4. Process according to any of Claims 1 to 3 wherein antioxidant A4 comprises at least one mixture from the group consisting of a mixture of mono- and dialkylated t-butyl/tert-octyldiphenylamines, a mixture of mono- and dialkylated nonyldiphenylamines, a mixture of mono- and dialkylated dodecyldiphenylamines, a mixture of mono- and dialkylated isopropyl/isohexyldiphenylamines and a mixture of mono- and dialkylated t-butyldiphenylamines.

**5.** Process according to any of Claims 1 to 4, wherein antioxidant A4 are present in an amount of 0.05 - 1.5 parts by wt, based on the sum of the parts by weight of components A1 and A2.

**6.** Process according to any of Claims 1 to 5, wherein the polyether carbonate polyol A1 is obtainable by copolymerization of

≥ 2 wt% to ≤ 30 wt% of carbon dioxide and ≥ 70 wt% to ≤ 98 wt% of one or more alkylene oxides
in the presence of one or more H-functional starter molecules having an average functionality of ≥ 1 to ≤ 6, preferably ≥ 1 to ≤ 4, particularly preferably ≥ 2 to ≤ 3.

**7.** Process according to any of Claims 1 to 6, wherein the polyether carbonate polyol A1 is obtainable using multimetal cyanide catalysts (DMC catalysts).

**8.** Process according to any of Claims 1 to 7, wherein the polyether carbonate polyol A1 is obtainable using ethylene oxide and/or propylene oxide.

**9.** Process according to any of Claims 1 to 8, wherein the polyether carbonate polyol A1 is obtainable using propylene oxide.

**10.** Process according to any of Claims 1 to 9, wherein the polyether carbonate polyol A1 comprises blocks according to formula (IX) with an e/f ratio of 2:1 to 1:20.

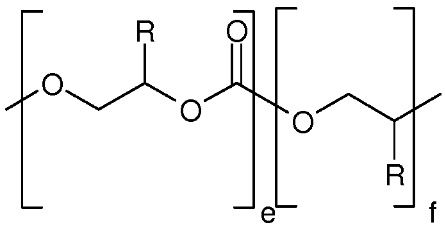 (IX)

**11.** Process according to any of Claims 1 to 10, wherein component B comprises tolylene 2,4-, 2,6-diisocyanate (TDI), diphenylmethane 4,4'-, 2,4'-, 2,2'-diisocyanate (MDI) and/or polyphenyl polymethylene polyisocyanate ("polycyclic MDI").

**12.** Flexible polyurethane foam obtainable by a process according to any of Claims 1 to 11.

**13.** Use of the flexible polyurethane foam according to Claim 12 for producing furniture cushioning, textile inserts, mattresses, automotive seats, headrests, armrests, sponges, foam sheetings for use in automotive components, for example roof headlinings, door trim, seat covers and constructional elements.

**Revendications**

**1.** Procédé pour la préparation de mousses de polyuréthane, de préférence de mousses souples de polyuréthane, par transformation d'un composant A contenant

A1 ≥ 50 à ≤ 100 parties en poids d'un polyéthercarbonate-polyol présentant un indice d'hydroxyle selon la norme DIN 53240 de ≥ 20 mg de KOH/g à ≤ 250 mg de KOH/g
A2 ≤ 50 à ≥ 0 parties en poids d'un polyétherpolyol présentant un indice d'hydroxyle selon la norme DIN 53240 de ≥ 20 mg de KOH/g à ≤ 250 mg de KOH/g, le polyétherpolyol étant exempt d'unités carbonate,
A3 0,5 à 25 parties en poids, par rapport à la somme des parties en poids des composants A1 et A2, d'eau et/ou d'agents gonflants physiques,
A4 0,02-3,0 parties en poids, par rapport à la somme des parties en poids des composants A1 et A2, d'un antioxydant qui comprend au moins un composé de formule

HNR1R2 (VI)

dans laquelle R1 représente C1-C18-alkyle, phényl-C1-C4-alkyle, C5-C12-cycloalkyle, phényle, naphtyle, phényle ou naphtyle dont chacun est substitué par C1-C12-alkyle ou par C1-C12-alcoxy ou par benzyle ou par $\alpha,\alpha$-diméthylbenzyle et R2 représente phényle, naphtyle, phényle ou naphtyle dont chacun est substitué par C1-C12-alkyle ou par C1-C12-alcoxy ou par benzyle ou par $\alpha,\alpha$-diméthylbenzyle,
A5 0,1 à 8,1 parties en poids, par rapport à la somme des parties en poids des composants A1 et A2, d'adjuvants et d'additifs,

avec un composant B contenant des diisocyanates et/ou des polyisocyanates, la préparation ayant lieu à un ratio de 70 à 130, toutes les indications de parties en poids des composants A1 à A5 étant normalisées de manière telle que la somme des parties en poids de A1 + A2 dans la composition vaut 100 et

a) le composant A ne contenant pas d'autres antioxydants à côté de l'antioxydant A4 ou
b) le composant A ne contenant pas d'antioxydants, à côté de l'antioxydant A4, qui comprennent un ou plusieurs composés choisis dans le groupe formé par

i) les dérivés du phénol
ii) les lactones
iii) les dérivés du phosphore.

**2.** Procédé selon la revendication 1, 100 parties en poids de A1 étant utilisées.

**3.** Procédé selon la revendication 1 ou 2, l'antioxydant A4 comprenant au moins un composé ou mélange du groupe constitué par la N,N'-diisopropyl-p-phénylènediamine, la N,N'-di-sec-butyl-p-phénylènediamine, la N,N'-bis(1,4-diméthylpentyl)-p-phénylènediamine, la N,N'-bis(1-éthyl-3-méthylpentyl)-p-phénylènediamine, la N,N'-bis(1-méthylheptyl)-p-phénylènediamine, la N,N'-dicyclohexyl-p-phénylènediamine, la N,N'-diphényl-p-phénylènediamine, la N,N'-bis(2-naphtyl)-p-phénylènediamine, la N-isopropyl-N'-phényl-p-phénylènediamine, la N-(1,3-diméthylbutyl)-N'-phényl-p-phénylènediamine, la N-(1-méthylheptyl)-N'-phényl-p-phénylènediamine, la N-cyclohexyl-N'-phényl-p-phénylènediamine, la 4-(p-toluènesulfamoyl)diphénylamine, la N,N'-diméthyl-N,N'-di-sec-butyl-p-phénylènediamine, la diphénylamine, la N-allyldiphénylamine, la 4-isopropoxydiphénylamine, la N-phényl-1-naphtylamine, la N-(4-t-octylphényl)-1-naphtylamine, la N-phényl-2-naphtylamine, la diphénylamine octylée, le 4-n-butylaminophénol, le 4-butyrylaminophénol, le 4-nonanoylaminophénol, le 4-dodécanoylaminophénol, le 4-octadécanoylaminophénol, la bis(4-méthoxyphényl)amine, le 2,6-di-t-butyl-4-diméthylaminométhylphénol, le 2,4'-diaminodiphénylméthane, le 4,4'-diaminodiphénylméthane, le N,N,N',N'-tétraméthyl-4,4'-diaminodiphénylméthane, le 1,2-bis[(2-méthylphényl)amino]éthane, le 1,2-bis(phénylamino)propane, le (o-toluyl)biguanide, la bis[4- (1',3'-diméthylbutyl)phényl]amine, la N-phényl-1-naphtylamine t-octylée, un mélange de t-butyl/t-octyldiphénylamines monoalkylées et dialkylées, un mélange de nonyldiphénylamines monoalkylées et dialkylées, un mélange de dodécyldiphénylamines monoalkylées et dialkylées, un mélange d'isopropyl/isohexyldiphénylamines monoalkylées et dialkylées, un mélange de t-butyldiphénylamines monoalkylées et dialkylées, la 2,3-dihydro-3,3-diméthyl-4H-1,4-benzothiazine, la phénothiazine, un mélange de t-butyl/t-octylphénothiazines monoalkylées et dialkylées ainsi qu'un mélange de t-octylphénothiazines monoalkylées et dialkylées, la N-allylphénothiazine et/ou le N,N,N',N'-tétraphényl-1,4-diaminobut-2-ène.

**4.** Procédé selon la revendication 1 à 3, l'antioxydant A4 comprenant au moins un mélange du groupe constitué par un mélange de t-butyl/tert-octyldiphénylamines monoalkylées et dialkylées, un mélange de nonyldiphénylamines monoalkylées et dialkylées, un mélange de dodécyldiphénylamines monoalkylées et dialkylées, un mélange d'isopropyl/isohexyldiphénylamines monoalkylées et dialkylées et un mélange de t-butyldiphénylamines monoalkylées et dialkylées.

**5.** Procédé selon la revendication 1 à 4, l'antioxydant A4 étant contenu en une quantité de 0,05-1,5 partie en poids, par rapport à la somme des parties en poids des composants A1 et A2.

**6.** Procédé selon la revendication 1 à 5, le polyéthercarbonate-polyol A1 pouvant être obtenu par copolymérisation de

$\geq$ 2% en poids à $\leq$ 30% en poids de dioxyde de carbone et $\geq$ 70% en poids à $\leq$ 98% en poids d'un ou de plusieurs oxydes d'alkylène
en présence d'une ou de plusieurs molécules de départ à fonctionnalité H présentant une fonctionnalité moyenne de $\geq$ 1 à $\leq$ 6, de préférence de $\geq$ 1 à $\leq$ 4, de manière particulièrement préférée de $\geq$ 2 à $\leq$ 3.

**7.** Procédé selon la revendication 1 à 6, le polyéthercarbonate-polyol A1 pouvant être obtenu avec utilisation de

catalyseurs de type cyanure multimétallique (catalyseurs DMC).

**8.** Procédé selon la revendication 1 à 7, le polyéthercarbonate-polyol A1 pouvant être obtenu avec utilisation d'oxyde d'éthylène et/ou d'oxyde de propylène.

**9.** Procédé selon la revendication 1 à 8, le polyéthercarbonate-polyol A1 pouvant être obtenu avec utilisation d'oxyde de propylène.

**10.** Procédé selon la revendication 1 à 9, le polyéthercarbonate-polyol A1 présentant des blocs selon la formule (IX) présentant un rapport de e/f de 2:1 à 1:20.

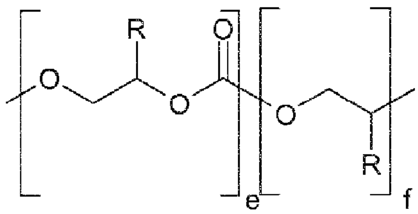

(IX)

**11.** Procédé selon l'une quelconque des revendications 1 à 10, le composant B comprenant du diisocyanate de 2,4-toluylène, du diisocyanate de 2,6-toluylène (TDI), du diisocyanate de 4,4'-diphénylméthane, du diisocyanate de 2,4'-diphénylméthane, du diisocyanate de 2,2'-diphénylméthane(MDI) et/ou du polyisocyanate de polyphénylpolyméthylène ("MDI à noyaux multiples").

**12.** Mousse souple de polyuréthane, pouvant être obtenue par un procédé selon la revendication 1 à 11.

**13.** Utilisation de la mousse souple de polyuréthane selon la revendication 12 pour la fabrication de rembourrages de meubles, de garnitures de textile, de matelas, de sièges automobiles, d'appuie-tête, d'accoudoirs, d'épongés, de feuilles en mousse destinées à être utilisées dans des pièces pour automobiles, comme par exemple des ciels de toit, des revêtements latéraux de portes, des couvre-sièges et des éléments de construction.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2008058913 A
- EP 355000 A
- EP 1359177 A
- EP 0222453 A
- WO 2008013731 A
- EP 2115032 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- EP 1874853 A
- EP 0000389 A
- EP 0176013 A
- EP 0007502 A


### In der Beschreibung aufgeführte Nicht-Patentliteratur


- Kunststoff-Handbuch. Carl-Hanser-Verlag, 1993, vol. VII
- **PETER P. KLEMCHUCK.** Ullmanns's Encyclopedia of Industrial Chemistry. Wiley VCH-Verlag, 2012, vol. 4, 162 ff
- Kunststoff-Handbuch. Carl-Hanser-Verlag, 1993, vol. VII, 104-127
- **W. SIEFKEN.** *Justus Liebigs Annalen der Chemie,* vol. 562, 75-136